(19) **Europäisches Patentamt / European Patent Office / Office européen des brevets**

(11) **EP 4 542 317 A1**

(12) **EUROPEAN PATENT APPLICATION**
published in accordance with Art. 153(4) EPC

(43) Date of publication:
**23.04.2025 Bulletin 2025/17**

(21) Application number: **23823518.8**

(22) Date of filing: **18.04.2023**

(51) International Patent Classification (IPC):
**G05B 19/4093** (2006.01)   **G05B 19/4097** (2006.01)
**B23Q 15/00** (2006.01)

(52) Cooperative Patent Classification (CPC):
**B23Q 15/00; G05B 19/4093; G05B 19/4097;**
**Y02P 90/02**

(86) International application number:
**PCT/JP2023/015474**

(87) International publication number:
**WO 2023/243215 (21.12.2023 Gazette 2023/51)**

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**KH MA MD TN**

(30) Priority: **15.06.2022 JP 2022096293**

(71) Applicant: **DMG Mori Co., Ltd.**
**Yamatokoriyama-shi, Nara 639-1160 (JP)**

(72) Inventor: **ITO Michihiko**
**Sapporo City, Hokkaido 004-0015 (JP)**

(74) Representative: **Isarpatent**
**Patent- und Rechtsanwälte**
**Barth Hassa Peckmann & Partner mbB**
**Friedrichstraße 31**
**80801 München (DE)**

(54) **INFORMATION PROCESSING DEVICE AND INFORMATION PROCESSING PROGRAM**

(57)    In an embodiment, target shape information indicating a target shape and machining information containing a tool path and tool-shape-related information are obtained. A reference point of the tool path is positioned at a predetermined position on the target shape, a position of each of the command points is then corrected on the basis of the target shape information, the tool path and the tool-shape-related information so that the tool comes into contact with the target shape, and a machining program is generated on the basis of the corrected command points.

FIG. 3

## Description

Technical Field

The present invention relates to information processing for generating machining programs to be used in a machine tool.

Background Art

As an example of a machine tool, a five-axis machine having three linear axes (X axis, Y axis, and Z axis), which are orthogonal to each other, and two rotary axes (B axis and C axis) is known. Rotation about the B axis causes a spindle to tilt, and rotation about the C axis causes a workpiece to rotate. In such a machine tool, a numerical controller executes a machining program (NC program) to control the five axes to machine a workpiece into a desired shape by changing the tip position and the posture of a tool. In execution of a machining program, the tip position is output as control commands. Hereinafter, this tip point will therefore also be referred to as a "command point".

Machining programs are generated on the basis of tool position data (cutter location data: hereinafter referred to as "CL data") obtained through computer-aided design (CAD) and computer-aided manufacturing (CAM). Specifically, a CAD/CAM device generates CL data including a tool path and a tool posture on the basis of CAD data. A path connecting command points constitutes a "tool path". A postprocessor generates a machining program on the basis of the CL data.

Related Art List

Patent Literatures

Patent Literature 1: JP 2019-070953 A

Summary

Technical Problem

Note that, as a result of verification conducted by the inventor, the inventor found that an unsmooth tool path can be output from a CAD/CAM device even for a smooth freeform surface of a freeform shape in machining into a complicated freeform shape, for example. If a machining program based on such a tool path is used, the machining quality of actual machining with a machine tool is likely to lower.

Solution to Problem

An aspect of the present invention is an information processing device. The information processing device includes: a shape information obtaining unit that obtains target shape information indicating a target shape; a machining information obtaining unit that obtains machining information containing a tool path and tool information, the tool path being constituted by a plurality of command points through which a tool passes in machining of a workpiece, the tool information containing tool-shape-related information of a tool used in the machining; and a machining program generating unit that positions a reference point of the tool path at a predetermined position on the target shape, then corrects a position of each of the command points on the basis of the target shape information, the tool path and the tool-shape-related information so that the tool comes into contact with the target shape, and generates a machining program based on the corrected command points.

Another aspect of the present invention is an information processing program for generating a machining program for machining a workpiece into a target shape. The information processing program includes: a function of obtaining target shape information indicating a target shape; a function of obtaining machining information containing a tool path and tool information, the tool path being constituted by a plurality of command points through which a tool passes in machining of a workpiece, the tool information containing tool-shape-related information of a tool used in the machining; and a function of positioning a reference point of the tool path at a predetermined position on the target shape, then correcting a position of each of the command points on the basis of the target shape information, the tool path and the tool-shape-related information so that the tool comes into contact with the target shape, and generating a machining program based on the corrected command points.

Advantageous Effects of Invention

According to the present invention, decrease in the machining quality due to the aforementioned causes in a machine tool can be suppressed.

Brief Description of Drawings

FIG. 1 is a schematic diagram illustrating a schematic configuration of a machine tool according to an embodiment.
FIG. 2 is a hardware configuration diagram of the machine tool.
FIG. 3 is a functional block diagram of an information processing device.
FIG. 4 is a diagram schematically illustrating a method of correcting command point data constituting a tool path.
FIGS. 5A to 5C are diagrams illustrating specific examples of a process of correcting command point data.
FIG. 6 is a diagram illustrating a specific example of the process of correcting command point data.

FIGS. 7A to 7C are diagrams illustrating specific examples of the process of correcting command point data.

FIG. 8 is a diagram illustrating a specific example of the process of correcting command point data.

FIGS. 9A to 9C are diagrams illustrating specific examples of the process of correcting command point data.

FIG. 10 is a diagram illustrating a specific example of the process of correcting command point data.

FIG. 11 is a flowchart illustrating a machining program generation process.

FIG. 12 is a flowchart illustrating a command point correction process in S18 in FIG. 11.

Description of Embodiments

An embodiment of the present disclosure will now be described with reference to the drawings.

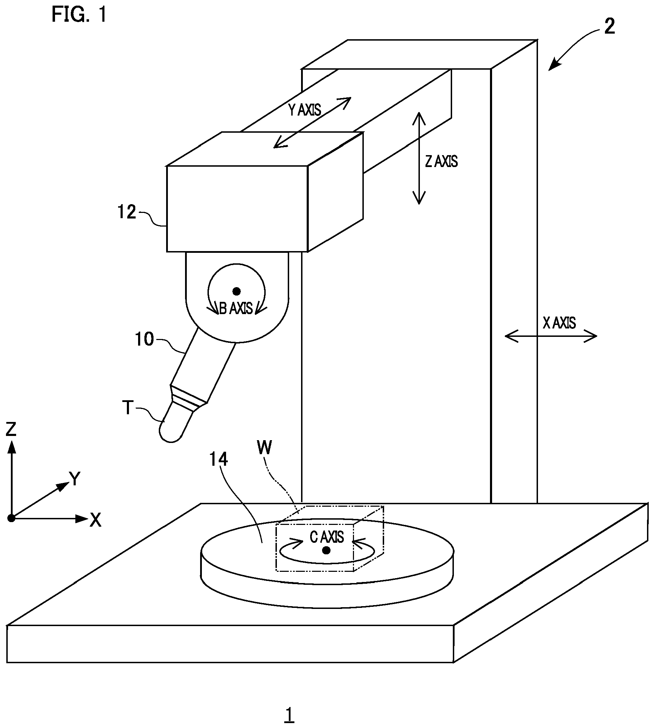

FIG. 1 is a schematic diagram illustrating a schematic configuration of a machine tool according to an embodiment. Herein, the left-right directions, the front-back directions, and the up-down directions when a machine tool 1 is viewed from the front will be referred to as an X-axis direction, a Y-axis direction, and a Z-axis direction, respectively.

The machine tool 1 is a five-axis control machining center that includes machining equipment 2 having three linear axes (X axis, Y axis, and Z axis), which are orthogonal each other, and two rotary axes (B axis and C axis). These five axes are simultaneously controlled by a numerical controller, which will be described later, so that various machining operations are performed by moving a tool along command points and changing the tool posture.

The machining equipment 2 includes a spindle head 12 that supports a spindle 10, and a table 14 that supports a workpiece W. The spindle head 12 has the B axis and supports the spindle 10 to be turnable (tiltable) about the B axis. The spindle 10 coaxially supports a tool T. The tool T is an end mill or the like, for example. The spindle head 12 is provided with a spindle motor for driving the spindle 10 to rotate about the axis and a servomotor for turning the spindle 10 about the B axis. As the spindle turns, a tilt angle of the tool T with respect to the Z-axis direction changes.

As the spindle 10 turns, a tilt angle of the tool T with respect to the workpiece W changes. In addition, the spindle head 12 is driven in the three axis directions by a plurality of servomotors. As the spindle head 12 is driven, the spindle 10 is moved in the X-axis, Y-axis, and Z-axis directions.

The workpiece W is fixed to the table 14 with a jig, which is not illustrated. The C axis is set along the axis of the table 14. The table 14 is driven by a servomotor, which is not illustrated, to rotate about the C axis. Specifically, the above-described structure allows relative positions of the workpiece W and the tool T to be three-dimensionally adjusted.

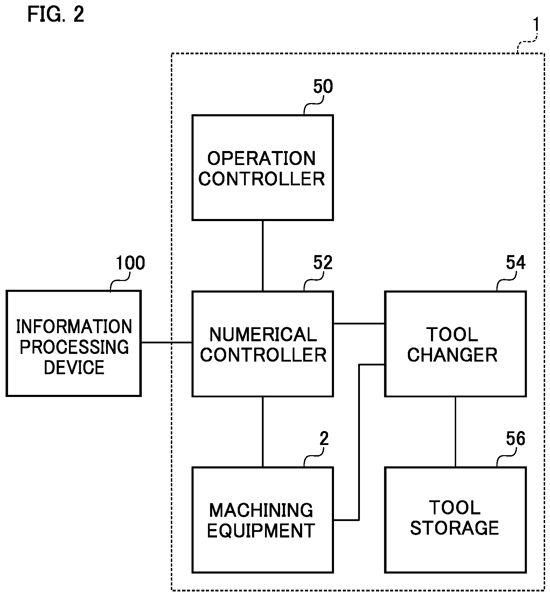

FIG. 2 is a hardware configuration diagram of the machine tool 1.

The machine tool 1 includes an operation controller 50, a numerical controller 52, the machining equipment 2, a tool changer 54, and a tool storage 56. The numerical controller 52 transmits control signals to the machining equipment 2 in accordance with a machining program (NC program) manually or automatically generated. The machining equipment 2 drives the spindle 10 and the table 14 to machine the workpiece W in accordance with instructions from the numerical controller 52.

The operation controller 50 includes an operation panel that provides a user interface function to an operator. The operator controls the numerical controller 52 via the operation controller 50. The tool storage 56 has tools stored therein. The tool changer 54 corresponds to a so-called an automatic tool changer (ATC). The tool changer 54 takes out a tool from the tool storage 56 and replaces the tool held on the spindle 10 with the tool taken out in accordance with a replacement instruction from the numerical controller 52.

An information processing device 100 is connected to the numerical controller 52. The information processing device 100 generates a machining program on the basis of CL data acquired from a CAD/CAM device, which is not illustrated, and outputs the machining program to the numerical controller 52. The numerical controller 52 executes the machining program to control the machining equipment 2. The information processing device 100 may be configured as part of the operation controller 50. The information processing device 100 may be a common laptop personal computer (PC) or a tablet computer.

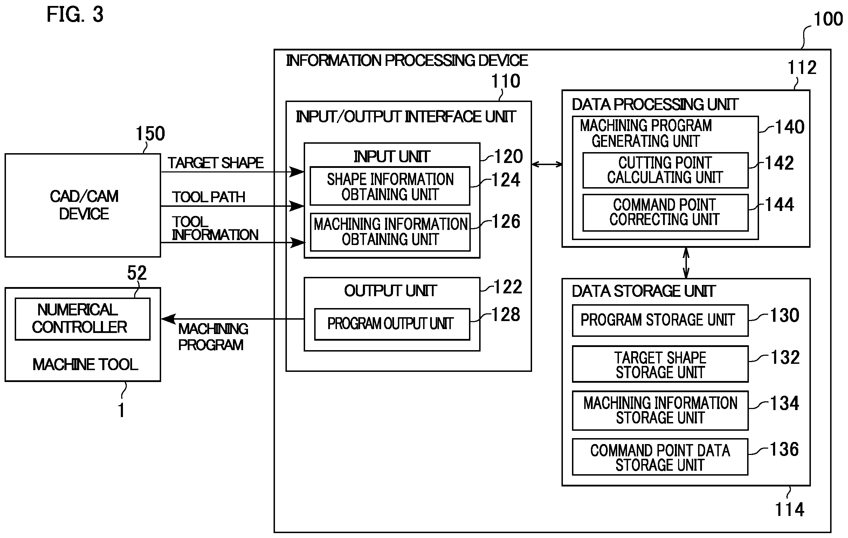

FIG. 3 is a functional block diagram of the information processing device 100.

The components of the information processing device 100 are implemented by hardware including computing units such as central processing units (CPUs) and various computer processors, storage devices such as memories and storages, and wired or wireless communication lines that connect these units and devices, and software that is stored in the storage devices and supplies processing instructions to the computing units. Computer programs may be constituted by device drivers, operating systems, various application programs on upper layers thereof, and a library that provides common functions to these programs. Blocks to be described below do not refer to configurations in units of hardware but to blocks in units of functions.

Note that the operation controller 50 and the numerical controller 52 may also be implemented by hardware including computing units such as processors, storage devices such as memories and storages, and wired or wireless communication lines that connect these units and devices, and software stored in the storage devices and supply processing instructions to the computing units.

The information processing device 100 includes an input/output interface unit 110, a data processing unit 112, and a data storage unit 114. The input/output interface unit 110 performs processes relating to input/output interfaces, including transmission and reception of data to/from external devices. The data processing unit 112 performs various processes on the basis of data obtained by the input/output interface unit 110 and data stored in the data storage unit 114. The data processing unit 112 also functions as interfaces of the input/output interface unit 110 and the data storage unit 114. The data storage unit 114 has various programs and set data stored therein.

The input/output interface unit 110 includes an input unit 120 and an output unit 122. The input unit 120 includes a shape information obtaining unit 124 and a machining information obtaining unit 126, and obtains various pieces of information relating to machining of the workpiece W from a CAD/CAM device 150. Note that, in the present embodiment, the CAD/CAM device 150 have functions of both of a CAD device and a CAM device. Alternatively, a CAD device and a CAM device may be provided separately. In this case, the CAM device obtains CAD data generated by the CAD device, and also obtains path generation information (a coordinate system, a tool shape, a feed rate, a spindle rotation speed, and the like). The CAM device generates CL data on the basis of the CAD data and the path generation information.

The shape information obtaining unit 124 obtains target shape information indicating a target shape of a workpiece to be machined from the CAD/CAM device 150. The target shape information includes CAD data. The machining information obtaining unit 126 obtains machining information for machining a workpiece from the CAD/CAM device 150. The tool path in the machining information can be obtained from the CL data. Tool information in the machining information can be obtained from the CL data or data in a predetermined data format. The machining information includes a machining reference point, the tool path, and the tool information. The tool path is constituted by a plurality of command points through which a tool passes for machining of a workpiece. The tool information includes shape-related information (hereinafter also referred to as "tool-shape-related information") of a tool used for machining. Examples of the tool-shape-related information includes a tool type, a tool shape such as a CAD drawing, information with which a tool shape can be calculated (the entire length and the diameter of a cutting tool), and the like.

The data storage unit 114 includes a program storage unit 130, a target shape storage unit 132, a machining information storage unit 134, and a command point data storage unit 136. The data storage unit 114 includes a memory that functions as working area for the data processing unit 112 to perform arithmetic processing.

The program storage unit 130 stores information processing programs for generating machining programs. The target shape storage unit 132 stores the target shape information obtained by the shape information obtaining unit 124. The machining information storage unit 134 stores the machining information obtained by the machining information obtaining unit 126. The tool path and the tool-shape-related information in the machining information are associated with each other by a tool number. The command point data storage unit 136 temporarily stores command point data calculated or corrected by the data processing unit 112 (details of which are described later).

The data processing unit 112 includes a machining program generating unit 140. The machining program generating unit 140 functions as a postprocessor that generates a machining program on the basis of the information obtained from the CAD/CAM device 150 (details of which will be described later). The machining program generating unit 140 includes a cutting point calculating unit 142, and a command point correcting unit 144. If an unsmooth tool path is output from the CAD/CAM device 150, the machining program generating unit 140 appropriately corrects the tool path before generating a machining program. This will be described in detail later.

The output unit 122 includes a program output unit 128. The program output unit 128 outputs the generated machining program to the numerical controller 52.

Next, a method of generating a machining program will be described.

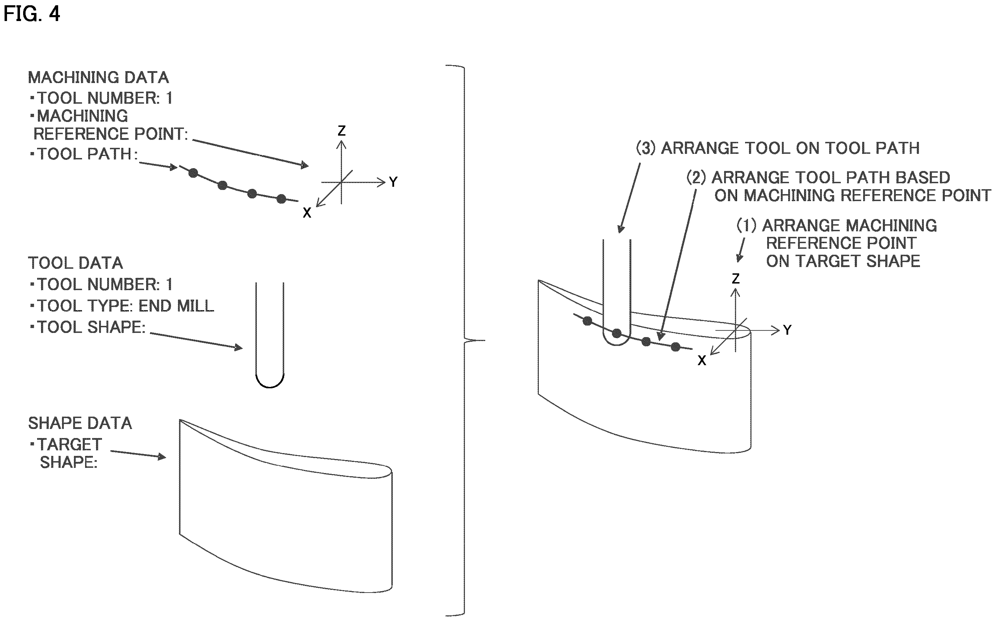

FIG. 4 is a diagram schematically illustrating a method of correcting command point data constituting a tool path.

As the CAD/CAM device 150 calculates a tool path on the basis of CAD data, the CAD/CAM device 150 may calculate an unsmooth tool path that does not correspond to a target shape owing to some computational cause. In other words, command point data calculated by the CAD/CAM device 150 may have partial error. Thus, in the present embodiment, the machining program generating unit 140 corrects command points so that the tool path does not have such an unsmooth part. A machining program is generated on the basis of CL data including the corrected command point data.

The correction process is based on that the shape information obtaining unit 124 obtains shape data of a workpiece and that the machining information obtaining unit 126 obtains machining data and tool data as the aforementioned machining information. The shape data is based on the CAD data and includes target shape information of a workpiece. The shape data is stored in the target shape storage unit 132.

The machining data includes information on a tool path and a machining reference point. The positions of the command points constituting the tool path are set on the basis of a predetermined machining reference point (machining origin point). The machining reference point is data necessary for adjusting a tool path to a target shape. The machining reference point is a point of reference for a tool path and is set in advance in relation to a target shape. The CL data output from the CAD/CAM device 150 includes a plurality of tool paths, and a machining reference point is set for each tool path. In addition, a tool to be used is associated with each tool path. Specifically, a tool path is associated with a tool number, so that a tool to move along the tool path can be identified on the basis of the tool number.

The tool data includes the tool information. The tool information includes, as the tool-shape-related information, a tool type and a tool shape. The tool information is associated with a tool number. Thus, the tool information associated with a tool path can be identified on the basis of the tool number. The machining data and the tool data are stored in the machining information storage unit 134.

The machining program generating unit 140 obtains the shape data, the machining data, and the tool data from the data storage unit 114. Then, the machining program generating unit 140 first arranges the target shape in a three-dimensional virtual space on the basis of these information data, and places the machining reference point on the target shape. Subsequently, the machining program generating unit 140 arranges the tool path relative to the machining reference point, and arranges the tool (tool shape) on the tool path. The arranged tool is associated with the tool path by the tool number.

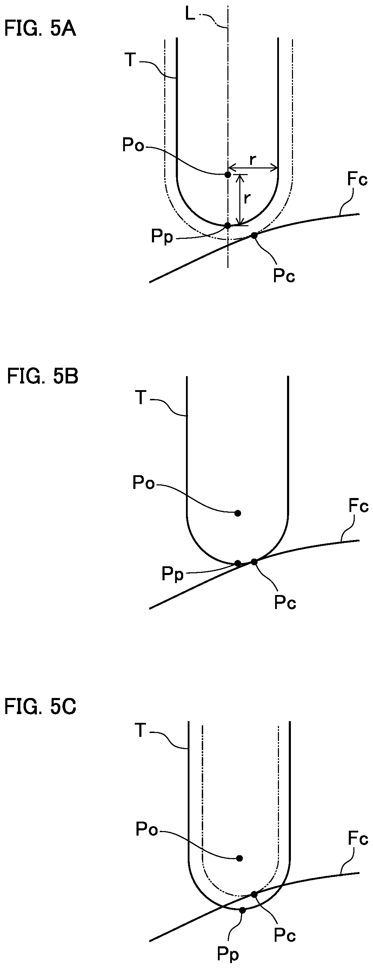

FIGS. 5A to 10 are diagrams illustrating specific examples of the process of correcting command point data (tool path).

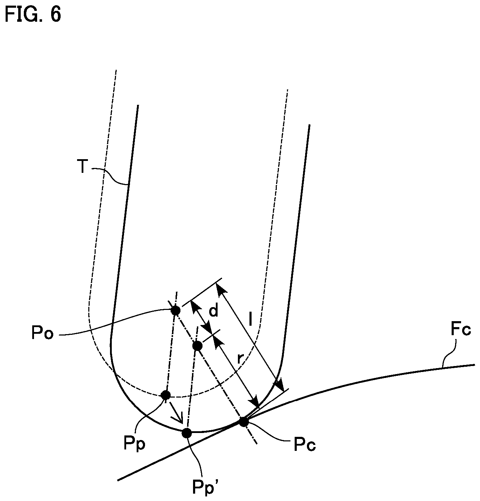

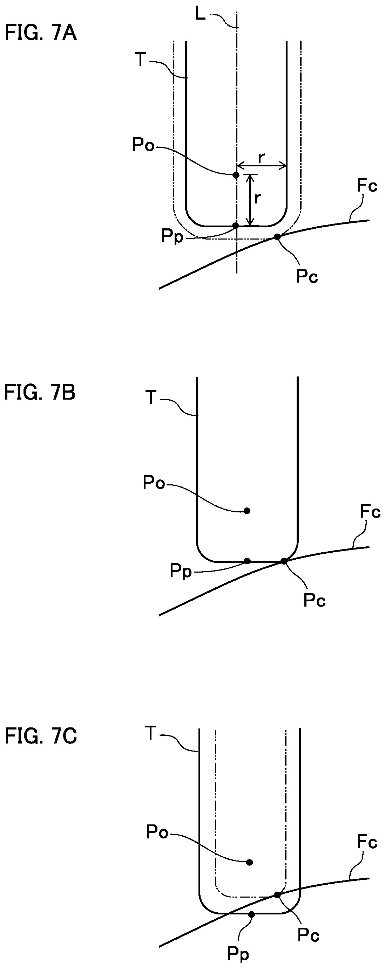

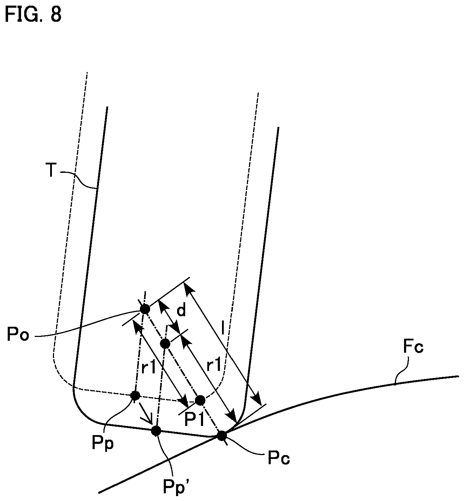

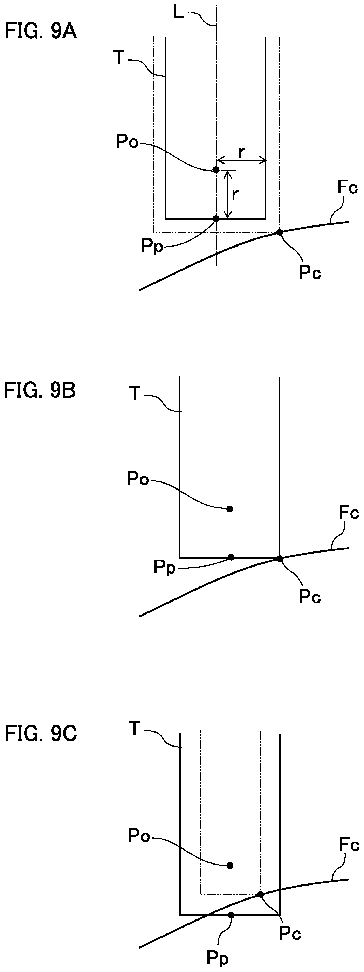

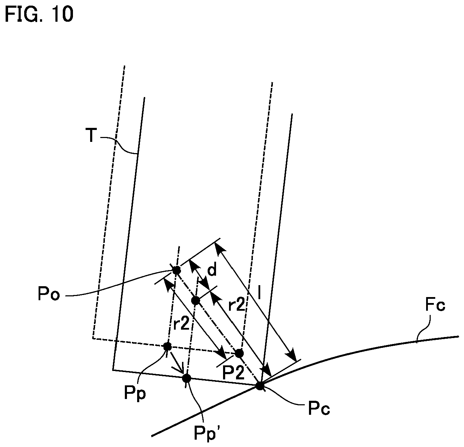

Herein, cases where an end mill is used as the tool will be presented. FIGS. 5A to 5C and 6 illustrate a case of a ball end mill, FIGS. 7A to 7C and 8 illustrate a case of a radius end mill, and FIGS. 9A to 9C and 10 illustrate a case of square end mill.

For example, in the case of the ball end mill, there are three possible states of the relative positions of a face Fc to be machined of the workpiece and the tool T, which are a case where the tool T and the face Fc to be machined are separated from each other (FIG. 5A), a case where the tool T and the face Fc to be machined are in contact with each other (FIG. 5B), and a case where the tool T and the face Fc to be machine overlap with each other (FIG. 5C). The case where the tool T and the face Fc to be machined are in contact with each other is a preferable state, in which a high quality of the machined face can be maintained. Note that, in the present embodiment, a command point Pp subject to position control is set at a blade tip of the tool T, and the center of the tool end is set to be a reference point Po (virtual reference point). The end surface of the tool T is at a position of a tool radius r from the reference point Po, and the command point Pp is on the axis L of the tool T on the end surface. The tool radius r is a radius of a cross section of the tool T.

If the CAD/CAM device 150 properly calculates the command point Pp on the basis of the CAD data, the tool path does not become unsmooth. In this case, the tool T moves in contact with the face Fc to be machined (FIG. 5B), which achieves a cut surface having a high machined surface quality along the target shape. A tool path included in CL data should properly have command point data that can achieve such cutting.

In a case where the CAD/CAM device 150 has calculated a tool path according to which the tool T and a face Fc to be machined are separated from each other (FIG. 5A), an uncut area will remain on the surface of the workpiece. Conversely, in a case where the CAD/CAM device 150 has calculated a tool path according to which the tool T and a face Fc to be machined overlap with each other (FIG. 5C), the surface of the workpiece will be excessively cut.

Thus, in the present embodiment, the tool path in the CL data output from the CAD/CAM device 150 is corrected so that such an uncut area will not remain or that such excessive cutting will not occur. Specifically, the command point data in the CL data is corrected.

First, the cutting point calculating unit 142 calculates a cutting point Pc corresponding to each command point Pp on the basis of the target shape, the tool path, and the tool shape arranged in the virtual space. The "cutting point Pc" is a point at which the tool T and the face Fc to be machined are in contact with each other when the tool T is arranged on the basis of a command point Pp on the tool path. In the illustrated example, a point at which a normal from the reference point Po to the face Fc to be machined intersects the face Fc corresponds to the "cutting point Pc".

Specifically, the cutting point calculating unit 142 arranges the tool T in the aforementioned virtual space on the basis of the tool path obtained from the CAD/CAM device 150. In this process, when the tool T is separated from the face Fc to be machined as illustrated in FIG. 5A, a contact point of an enlarged figure of the tool T and the face Fc to be machined, which is obtained by enlarging the figure of the tool T with the center of enlargement being the reference point Po until the enlarged figure (see two-dot chain line) comes into contact with the face Fc to be machined, is the cutting point Pc. When the tool T is in contact with the face Fc to be machined as illustrated in FIG. 5B, the contact point of the tool T and the face Fc to be machined corresponds to the cutting point Pc. When the tool T and the face Fc to be machined overlap with each other as illustrated in FIG. 5C, a contact point of a reduced figure of the tool T and the face Fc to be machined, which is obtained by reducing the figure of the tool T with the center of reduction being the reference point Po until the reduced figure (see two-dot chain line) comes into contact with the face Fc to be machined, is the cutting point Pc. Thus, the figure of the tool T is enlarged or reduced with respect to the reference point Po being a tool enlargement/reduction reference point, and the contact point of the figure of the tool T and the face Fc to be machined is calculated as the cutting point Pc.

Subsequently, the command point correcting unit 144 obtains a distance 1 between the reference point Po and the cutting point Pc as illustrated in FIG. 6. Note that, when the command point Pp is expressed as $Pp = (Ppx, Ppy, Ppz)^T$, the reference point Po is expressed as $Po = (Pox, Poy, Poz)^T$, and the cutting point Pc is expressed as $Pc = (Pcx, Pcy, Pcz)^T$, the distance 1 is obtained by the following formula (1):

$$l = |Pc-Po| \quad \ldots(1).$$

Subsequently, the difference d between the distance 1 and the tool radius r is obtained by the following formula (2):

$$d = l-r \quad \ldots(2).$$

When d is a positive value, that is, when the tool T and the face Fc to be machined are not in contact with each other, the command point correcting unit 144 corrects the command point Pp so that the tool T is closer to the face Fc to be machined. The corrected command point Pp' is obtained by the following formula (3):

$$Pp' = Pp+d(Pc-Po) \quad \ldots(3).$$

When d is a negative value, that is, when the tool T and the face Fc to be machined intersect with each other, the command point correcting unit 144 also corrects the command point Pp so that the tool T is separated from the face Fc to be machined. Consequently, the corrected command point Pp' is obtained by the formula (3). When d is zero, the command point Pp need not be corrected.

In the case of the radius end mill, as illustrated in FIG. 7A, the cutting point calculating unit 142 sets a command point Pp at the blade tip of the tool T, and sets the reference point Po at a position on the axis L of the tool T at a tool radius r from the command point Pp. In a manner similar to the case of the ball end mill, when the tool T is separated from the face Fc to be machined, a contact point of an enlarged figure of the tool T and the face Fc to be machined, which is obtained by enlarging the figure of the tool T with the center of enlargement being the reference point Po until the enlarged figure comes into contact with the face Fc to be machined, is the cutting point Pc (FIG. 7A). When the tool T is in contact with the face Fc to be machined, the contact point of the tool T and the face Fc to be machined corresponds to the cutting point Pc (FIG. 7B). When the tool T and the face Fc to be machined overlap with each other, a contact point of a reduced figure of the tool T and the face Fc to be machined, which is obtained by reducing the figure of the tool T with the center of reduction being the reference point Po until the reduced figure comes into contact with the face Fc to be machined, is the cutting point Pc (FIG. 7C).

The command point correcting unit 144 obtains the distance 1 between the reference point Po and the cutting point Pc as illustrated in FIG. 8. The command point correcting unit 144 also obtains an intersection point P1 between a line connecting the reference point Po with the cutting point Pc and the end face of the tool T before being corrected (broken line) to calculate the distance r1 between the reference point Po and the intersection point P1. The command point correcting unit 144 assigns this distance r1 to r in the formula (2) to calculate a difference d, and substitutes the difference d into the formula (3) to calculate the command point Pp'. Each command point Pp is thus corrected to a command point Pp'.

In the case of the square end mill, as illustrated in FIG. 9A, the cutting point calculating unit 142 sets a command point Pp at the blade tip of the tool T, and sets the reference point Po at a position on the axis L of the tool T at a tool radius r from the command point Pp. In a manner similar to the case of the radius end mill, when the tool T is separated from the face Fc to be machined, a contact point of an enlarged figure of the tool T and the face Fc to be machined, which is obtained by enlarging the figure of the tool T with the center of enlargement being the reference point Po until the enlarged figure comes into contact with the face Fc to be machined, is the cutting point Pc (FIG. 9A). When the tool T is in contact with the face Fc to be machined, the contact point of the tool T and the face Fc to be machined corresponds to the cutting point Pc (FIG. 9B). When the tool T and the face Fc to be machined overlap with each other, a contact point of a reduced figure of the tool T and the face Fc to be machined, which is obtained by reducing the figure of the tool T with the center of reduction being the reference point Po until the reduced figure comes into contact with the face Fc to be machined, is the cutting point Pc (FIG. 9C).

The command point correcting unit 144 obtains the distance 1 between the reference point Po and the cutting point Pc as illustrated in FIG. 10. The command point correcting unit 144 also obtains an intersection point P2 between a line connecting the reference point Po with the cutting point Pc and the end face of the tool T before being corrected (broken line) to calculate the distance r2 between the reference point Po and the intersection point P2. The command point correcting unit 144 assigns this distance r2 to r in the formula (2) to calculate a difference d, and substitutes the difference d into the formula (3) to calculate the command point Pp'. Each command point Pp is thus corrected to a command point Pp'.

After each command point Pp is corrected as described above, the machining program generating unit 140 modifies the CL data to include a tool path having the corrected command points Pp', and generates a machining program on the basis of the CL data.

Next, a machining program generation process will be described in detail.

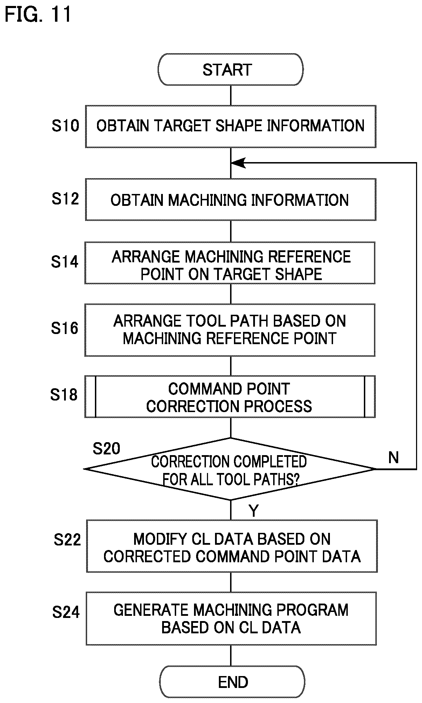

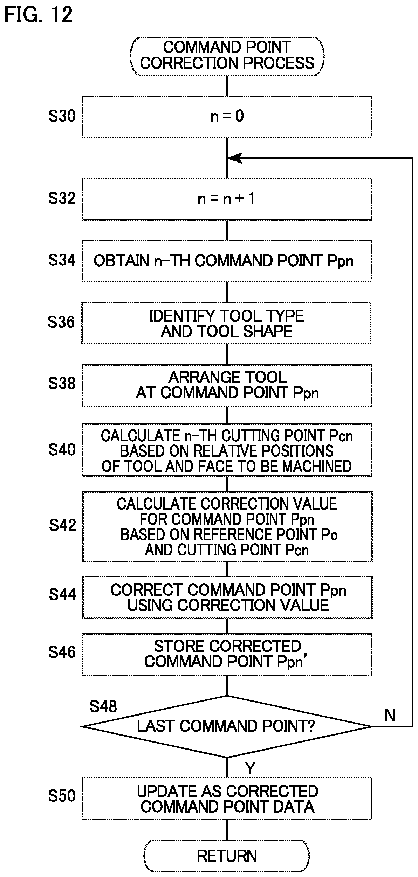

FIG. 11 is a flowchart illustrating a machining program generation process. FIG. 12 is a flowchart illustrating a command point correction process in S18 in FIG. 11.

As illustrated in FIG. 11, the machining program generating unit 140 first reads target shape information from the target shape storage unit 132 (S10), and reads machining information from the machining information storage unit 134 (S12). As described above, the machining information contains tool path information (a tool path before being corrected) and tool information. The tool information contains tool-shape-related information.

Subsequently, the machining program generating unit 140 arranges a machining reference point on the obtained target shape (S14), and arranges the tool path (the command points before correction) on the basis of the machining reference point (S16). The machining program generating unit 140 then performs the command point correction process to correct the command points (S18).

As illustrated in FIG. 12, the machining program generating unit 140 sequentially corrects the command points constituting the tool path in the command point correction process. Note that "n" described below corresponds to an ordinal number in the correction process. The machining program generating unit 140 clears n to zero and starts the process (S30).

The machining program generating unit 140 updates the ordinal number n (S32), and obtains an n-th command point Ppn (S34). In first processing, the machining program generating unit 140 reads position information of a command point Pp1. The machining program generating unit 140 then identifies a tool type and a tool shape on the basis of the tool number associated with the command point Ppn (S36), and arranges the tool T at the command point Ppn (S38). Thus, the machining program generating unit 140 arranges the tool T so that the tip end of the identified tool shape is on the command point. At this point, the reference point Po is also set.

Subsequently, the machining program generating unit 140 enlarges or reduces the figure of the tool T as necessary based on the relative positions of the tool T and the face Fc to be machined as described above, and calculates an n-th cutting point Pcn corresponding to the command point Ppn (S40).

The machining program generating unit 140 calculates a correction value for the command point Ppn on the basis of the reference point Po and the cutting point Pcn (S42). The correction value is a movement vector for correction, which corresponds to d(Pcn-Ppo) according to the formula (3) above. The command point data storage unit 136 stores a corrected command point Ppn'. These processes are repeated until correction of a last command point is completed (N in S48). When correction of the last command point is completed (Y in S48), the machining program generating unit 140 updates the thus stored command points Ppn' as corrected command point data (S50).

The description refers back to FIG. 11, in which, when correction of the command point data is completed for all the tool paths (Y in S20), the machining program generating unit 140 modifies the CL data on the basis of the corrected command point data (S22). The machining program generating unit 140 then generates a machining program on the basis of the CL data (S24). If the correction has not been completed (N in S20), the process returns to S12.

The information processing device 100 according to an embodiment has been described above. The inventor found a new problem in that a tool path in CL data output from a CAM can have an unsmooth part that is not supposed to be present, conceived of an idea of correcting command points based on comparison between the tool path and a target shape, and realized the idea in the embodiment. In particular, the inventor enabled accurate calculation of an error of a command point with respect to a target shape by adjusting the arrangement of a tool path and the target shape on the basis of a machining reference point on the target shape. According to the embodiment, a tool path output from a CAM can be optimized by correcting respective command points so that the tool path is made to match a target shape. CL data including the optimized tool path is converted into a machining program, and a high quality of a machined face of a workpiece can therefore be maintained. In addition, because unsmoothness of a tool path is prevented, a decrease in machining speed due to the unsmoothness and thus an increase in machining time can be prevented.

[Modifications]

While an example of an end mill as the tool has been presented in the embodiment, it is needless to say that the correction method described above is also applicable to various tools such as other milling tools, taps, and turning tools.

In the embodiment described above, an example in which the machining program generating unit 140 functions as a postprocessor has been presented. In a modification, the machining program generating unit may be incorporated as a function of a CAD/CAM device (or a single CAM device). Alternatively, the machining program generating unit may be incorporated as a function of a numerical controller.

Although not mentioned in the embodiment described above, the machining information may include process information of machining. A "process" may be one of a plurality of processes into which machining is broken down. Examples of the process information may include information 1 (linear machining, start point, end point) and information 2 (drilling, depth, hole size).

In the embodiment described above, an example of a five-axis machine as a machine tool has been presented. Specifically, an example in which three linear axes include the X axis, the Y axis, and the Z axis, and two rotary axes include the B axis and the C axis has been presented. In a modification, rotary axes may include an A axis and the C axis. Alternatively rotary axes may include the A axis and the B axis. Still alternatively, a machine tool may be a four-axis machine including one rotary axis (the B axis only, for example) may be adopted.

In the embodiment described above, an example of a configuration in which the tool is turned about one (the B axis) of two rotary axes and the table is turned about the other (the C axis) as the machining equipment 2 has been presented. In a modification, two rotary axes may be on the spindle side. Alternatively, two rotary axes may be on the table side. For example, a configuration in which a table is supported to be rotatable about a C axis by a first member and the first member is supported to be rotatable about an A axis or a B axis by a second member may be adopted. In a case where the second member has the A axis, the second member may be supported to be movable in the Y-axis direction. In a case where the second member has the B axis, the second member may be supported to be movable in the X-axis direction.

Although not mentioned in the embodiment described above, the information processing program may be recorded in a computer-readable recording medium and provided therefrom.

The present invention is not limited to the embodiments described above and modifications thereof, and any component thereof may be modified and embodied without departing from the scope of the invention. Components described in the embodiments and modifications may be combined as appropriate to form various embodiments. Some components may be omitted from the components presented in the embodiments and modifications.

This application claims priority to Japanese Patent Application No. 2022-096293 filed on June 15, 2022, which is incorporated herein by reference in its entirety.

**Claims**

1. An information processing device comprising:

   a shape information obtaining unit configured to obtain target shape information indicating a target shape;
   a machining information obtaining unit configured to obtain machining information containing a tool path and tool information, the tool path being constituted by a plurality of command points through which a tool passes in machining of a workpiece, the tool information containing tool-shape-related information of a tool used in the machining; and
   a machining program generating unit configured to position a reference point of the tool path at a predetermined position on the target shape, then correct a position of each of the command points on the basis of the target shape information, the tool path and the tool-shape-related information so that the tool comes into contact with the target shape, and generate a machining program based on the corrected command points.

2. The information processing device according to claim 1,

   wherein the tool information contains a tool number representing a tool to be used along the tool path, and
   wherein the machining information obtaining unit obtains the tool-shape-related information associated in advance with the tool number.

3. The information processing device according to claim 1 or 2,
   wherein the machining information contains process information of the machining.

4. The information processing device according to claim 1 or 2,
   wherein the machining program generating unit is configured to:

   set a virtual reference point on the basis of the command points set on the tool path and the tool shape contained in the tool-shape-related information;
   calculate a cutting point at which the tool and the target shape are to be in contact with each other by enlarging or reducing the tool shape with respect to the virtual reference point; and
   correct each command point to be closer to the target shape in a correcting direction when the tool shape is enlarged or correct each command point to be farther from the target shape in the correcting direction when the tool shape is reduced, the correcting direction being a direction connecting the virtual reference point with the cutting point.

5. An information processing program for generating a machining program for machining a workpiece into a target shape, the information processing program comprising:

   a function of obtaining target shape information indicating a target shape;
   a function of obtaining machining information containing a tool path and tool information, the tool path being constituted by a plurality of command points through which a tool passes in machining of a workpiece, the tool information containing tool-shape-related information of a tool used in the machining; and
   a function of positioning a reference point of the tool path at a predetermined position on the target shape, then correcting a position of each of the command points on the basis of the target shape information, the tool path and the tool-shape-related information so that the tool comes into contact with the target shape, and generating a machining program based on the corrected command points.

FIG. 1

1

FIG. 2

FIG. 3

INFORMATION PROCESSING DEVICE — 100

INPUT/OUTPUT INTERFACE UNIT — 110

DATA PROCESSING UNIT — 112

MACHINING PROGRAM GENERATING UNIT — 140

CUTTING POINT CALCULATING UNIT — 142

COMMAND POINT CORRECTING UNIT — 144

INPUT UNIT — 120

SHAPE INFORMATION OBTAINING UNIT — 124

MACHINING INFORMATION OBTAINING UNIT — 126

OUTPUT UNIT — 122

PROGRAM OUTPUT UNIT — 128

DATA STORAGE UNIT — 114

PROGRAM STORAGE UNIT — 130

TARGET SHAPE STORAGE UNIT — 132

MACHINING INFORMATION STORAGE UNIT — 134

COMMAND POINT DATA STORAGE UNIT — 136

CAD/CAM DEVICE — 150

TARGET SHAPE

TOOL PATH

TOOL INFORMATION

NUMERICAL CONTROLLER — 52

MACHINING PROGRAM

MACHINE TOOL — 1

EP 4 542 317 A1

## FIG. 4

MACHINING DATA
- TOOL NUMBER: 1
- MACHINING
  REFERENCE POINT:
- TOOL PATH:

TOOL DATA
- TOOL NUMBER: 1
- TOOL TYPE: END MILL
- TOOL SHAPE:

SHAPE DATA
- TARGET
  SHAPE:

(3) ARRANGE TOOL ON TOOL PATH

(2) ARRANGE TOOL PATH BASED
    ON MACHINING REFERENCE POINT

(1) ARRANGE MACHINING
    REFERENCE POINT
    ON TARGET SHAPE

EP 4 542 317 A1

FIG. 5A

FIG. 5B

FIG. 5C

FIG. 6

FIG. 7A

FIG. 7B

FIG. 7C

FIG. 8

FIG. 9A

FIG. 9B

FIG. 9C

FIG. 10

FIG. 11

```
                    ┌──────────────────┐
                    │      START       │
                    └──────────────────┘
                              │
        S10    ┌────────────────────────────────────┐
               │   OBTAIN TARGET SHAPE INFORMATION   │
               └────────────────────────────────────┘
                              │
                              ▼◄──────────────────────┐
        S12    ┌────────────────────────────────────┐ │
               │     OBTAIN MACHINING INFORMATION    │ │
               └────────────────────────────────────┘ │
                              │                        │
        S14    ┌────────────────────────────────────┐ │
               │     ARRANGE MACHINING REFERENCE     │ │
               │       POINT ON TARGET SHAPE         │ │
               └────────────────────────────────────┘ │
                              │                        │
        S16    ┌────────────────────────────────────┐ │
               │      ARRANGE TOOL PATH BASED ON     │ │
               │      MACHINING REFERENCE POINT      │ │
               └────────────────────────────────────┘ │
                              │                        │
        S18    ┌────────────────────────────────────┐ │
               ║         COMMAND POINT              ║ │
               ║       CORRECTION PROCESS           ║ │
               └────────────────────────────────────┘ │
                              │                        │
        S20              ╱─────────────╲            N  │
                    ╱  CORRECTION COMPLETED  ╲─────────┘
                    ╲  FOR ALL TOOL PATHS?  ╱
                         ╲─────────────╱
                              │ Y
        S22    ┌────────────────────────────────────┐
               │       MODIFY CL DATA BASED ON       │
               │    CORRECTED COMMAND POINT DATA     │
               └────────────────────────────────────┘
                              │
        S24    ┌────────────────────────────────────┐
               │     GENERATE MACHINING PROGRAM      │
               │          BASED ON CL DATA           │
               └────────────────────────────────────┘
                              │
                    ┌──────────────────┐
                    │       END        │
                    └──────────────────┘
```

## FIG. 12

```
        ╭─────────────────────────╮
        │   COMMAND POINT         │
        │ CORRECTION PROCESS      │
        ╰─────────────────────────╯
                   │
 S30   ┌───────────────────────────┐
       │          n = 0            │
       └───────────────────────────┘
                   │
                   ▼◄──────────────────┐
 S32   ┌───────────────────────────┐   │
       │        n = n + 1          │   │
       └───────────────────────────┘   │
                   │                    │
 S34   ┌───────────────────────────┐   │
       │ OBTAIN n-TH COMMAND POINT Ppn │
       └───────────────────────────┘   │
                   │                    │
 S36   ┌───────────────────────────┐   │
       │     IDENTIFY TOOL TYPE    │   │
       │     AND TOOL SHAPE        │   │
       └───────────────────────────┘   │
                   │                    │
 S38   ┌───────────────────────────┐   │
       │      ARRANGE TOOL         │   │
       │  AT COMMAND POINT Ppn     │   │
       └───────────────────────────┘   │
                   │                    │
 S40   ┌───────────────────────────┐   │
       │ CALCULATE n-TH CUTTING POINT Pcn │
       │  BASED ON RELATIVE POSITIONS │   │
       │ OF TOOL AND FACE TO BE MACHINED │
       └───────────────────────────┘   │
                   │                    │
 S42   ┌───────────────────────────┐   │
       │ CALCULATE CORRECTION VALUE │   │
       │  FOR COMMAND POINT Ppn    │   │
       │ BASED ON REFERENCE POINT Po │  │
       │  AND CUTTING POINT Pcn    │   │
       └───────────────────────────┘   │
                   │                    │
 S44   ┌───────────────────────────┐   │
       │ CORRECT COMMAND POINT Ppn │   │
       │  USING CORRECTION VALUE   │   │
       └───────────────────────────┘   │
                   │                    │
 S46   ┌───────────────────────────┐   │
       │    STORE CORRECTED        │   │
       │  COMMAND POINT Ppn'       │   │
       └───────────────────────────┘   │
                   │                    │
 S48           ◇─────────◇          N   │
           LAST COMMAND POINT? ─────────┘
               ◇─────────◇
                   │ Y
 S50   ┌───────────────────────────┐
       │  UPDATE AS CORRECTED      │
       │  COMMAND POINT DATA       │
       └───────────────────────────┘
                   │
           ╭───────────────╮
           │    RETURN     │
           ╰───────────────╯
```

<div align="center">

**INTERNATIONAL SEARCH REPORT**

</div>

| | International application No. |
|---|---|
| | **PCT/JP2023/015474** |

| **A.** | **CLASSIFICATION OF SUBJECT MATTER** |
|---|---|

*G05B 19/4093*(2006.01)i; *G05B 19/4097*(2006.01)i; *B23Q 15/00*(2006.01)i
FI:  G05B19/4093 A; G05B19/4097 Z; B23Q15/00 301K

According to International Patent Classification (IPC) or to both national classification and IPC

| **B.** | **FIELDS SEARCHED** |
|---|---|

Minimum documentation searched (classification system followed by classification symbols)

G05B19/18-19/46; B23Q15/00

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

| **C.** | **DOCUMENTS CONSIDERED TO BE RELEVANT** |
|---|---|

| Category* | Citation of document, with indication, where appropriate, of the relevant passages | Relevant to claim No. |
|---|---|---|
| X | JP 2021-39533 A (FANUC LTD.) 11 March 2021 (2021-03-11) | 1, 5 |
| | paragraphs [0008]-[0032] | |
| Y | | 2-3 |
| A | | 4 |
| Y | JP 2005-321890 A (KAWASAKI HEAVY IND., LTD.) 17 November 2005 (2005-11-17) | 2-3 |
| | paragraphs [0038]-[0040] | |
| Y | JP 2008-197758 A (TOYOTA CENTRAL R&D LABS., INC.) 28 August 2008 (2008-08-28) | 3 |
| | paragraph [0028] | |
| Y | JP 2017-538239 A (P + L GMBH & CO. KG) 21 December 2017 (2017-12-21) | 3 |
| | paragraph [0026] | |
| A | JP 6903255 B1 (MITSUBISHI ELECTRIC CORP.) 14 July 2021 (2021-07-14) | 1-5 |
| | paragraphs [0022]-[0056] | |
| A | WO 2017/110236 A1 (MITSUBISHI ELECTRIC CORP.) 29 June 2017 (2017-06-29) | 1-5 |

☑ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **06 June 2023** | **20 June 2023** |

| Name and mailing address of the ISA/JP | Authorized officer |
|---|---|
| **Japan Patent Office (ISA/JP)** <br> **3-4-3 Kasumigaseki, Chiyoda-ku, Tokyo 100-8915** <br> **Japan** | |
| | Telephone No. |

Form PCT/ISA/210 (second sheet) (January 2015)

**INTERNATIONAL SEARCH REPORT**

International application No.

**PCT/JP2023/015474**

C. DOCUMENTS CONSIDERED TO BE RELEVANT

| Category* | Citation of document, with indication, where appropriate, of the relevant passages | Relevant to claim No. |
|---|---|---|
| A | WO 2020/178978 A1 (MITSUBISHI ELECTRIC CORP.) 10 September 2020 (2020-09-10) | 1-5 |
| A | WO 2021/095170 A1 (MITSUBISHI ELECTRIC CORP.) 20 May 2021 (2021-05-20) | 1-5 |
| A | JP 2020-187732 A (SHIBAURA MACHINE CO., LTD.) 19 November 2020 (2020-11-19) | 1-5 |

Form PCT/ISA/210 (second sheet) (January 2015)

**INTERNATIONAL SEARCH REPORT**
Information on patent family members

International application No.

**PCT/JP2023/015474**

| Patent document cited in search report | | | Publication date (day/month/year) | Patent family member(s) | | | Publication date (day/month/year) |
|---|---|---|---|---|---|---|---|
| JP | 2021-39533 | A | 11 March 2021 | US 2021/0063994 A1 paragraphs [0017]-[0041] DE 102020005162 A1 CN 112445180 A | | | |
| JP | 2005-321890 | A | 17 November 2005 | (Family: none) | | | |
| JP | 2008-197758 | A | 28 August 2008 | (Family: none) | | | |
| JP | 2017-538239 | A | 21 December 2017 | US 2017/0343982 A1 paragraph [0027] WO 2016/078781 A1 DE 102014223434 A1 CA 2968011 A KR 10-2017-0070209 A CN 107003657 A | | | |
| JP | 6903255 | B1 | 14 July 2021 | WO 2022/149278 A1 | | | |
| WO | 2017/110236 | A1 | 29 June 2017 | US 2018/0299859 A1 DE 112016005969 T CN 108369407 A | | | |
| WO | 2020/178978 | A1 | 10 September 2020 | CN 113490894 A | | | |
| WO | 2021/095170 | A1 | 20 May 2021 | US 2022/0382253 A1 CN 114730171 A | | | |
| JP | 2020-187732 | A | 19 November 2020 | US 2022/0063040 A1 WO 2020/230568 A1 DE 112020002392 T CN 113710418 A TW 202043953 A KR 10-2022-0007874 A | | | |

Form PCT/ISA/210 (patent family annex) (January 2015)

**REFERENCES CITED IN THE DESCRIPTION**

**Patent documents cited in the description**

- JP 2019070953 A

- JP 2022096293 A